(19) Europäisches Patentamt

European Patent Office

Office européen des brevets

(11) **EP 1 109 087 A1**

(12) **EUROPÄISCHE PATENTANMELDUNG**

(43) Veröffentlichungstag:
   **20.06.2001 Patentblatt 2001/25**

(51) Int Cl.[7]: **G05D 7/06**, F16F 7/10,
   C10M 169/04, F16D 35/00

(21) Anmeldenummer: **00119086.7**

(22) Anmeldetag: **02.09.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **16.12.1999 DE 19960749**

(71) Anmelder: **CARL SCHENCK AG**
   **64293 Darmstadt (DE)**

(72) Erfinder: **Schlemmer, Bernd-Rainer**
   **64646 Heppenheim (DE)**

(74) Vertreter: **Behrens, Helmut, Dipl.-Ing.**
   **Im Tiefen See 45 a**
   **64293 Darmstadt (DE)**

(54) **Anordnung zur Steuerung des Fliessverhaltens von in einem Strömungskanal befindlichen elektrorheologischen Flüssigkeiten**

(57)   Bei einer Anordnung zur Steuerung des Fließverhaltens von in einem Strömungskanal (1, 9, 14, 20, 25, 30) befindlichen, mit einem elektrischen Feld beaufschlagbaren elektrorheologischen Flüssigkeiten, sind Mittel vorgesehen, die eine Veränderung des elektrischen Feldes über den Querschnitt des Strömungskanals (1, 9, 14, 20, 25, 30) bewirken, wodurch eine Vermeidung des Bingham-Effektes erreicht wird.

Fig 1a

**Beschreibung**

Anordnung zur Steuerung des Fließverhaltens von in einem Strömungskanal befindlichen elektrorheologischen Flüssigkeiten

Elektrorheologische Flüssigkeiten sind Flüssigkeiten, bei denen die rheologischen Eigenschaften über das elektrische Feld steuerbar sind. In der Regel handelt es sich bei diesen Flüssigkeiten um Suspensionen, d. h. in einem Trägermedium suspendierte Festpartikel, die über das elektrische Feld polarisierbar sind. Die elektrorheologische Flüssigkeit wechselt dabei unter dem Einfluß eines elektrischen Feldes ihren Aggregatszustand sehr schnell und reversibel. Beispiele für elektrorheologische Flüssigkeiten sind in der DE 35 17 281, DE 39 41 232, DE 40 26 881, DE 41 19 670 offenbart.

Durch die Verwendung elektrorheologischer Flüssigkeiten ist es möglich geworden, hydraulische Systeme ohne bewegte Teile auszuführen bzw. die Anzahl der bewegten Teile zu verringern. Bekannt ist der Einsatz bei Hydraulikventilen, Hydraulikzylindern, Viskositätskupplungen, Stoßdämpfern oder Motorlagern (Übersichtsartikel "Applications of the electrorheological effect in engineering practice", Fluid Mechanics-Soviet Research, Vol. 8 and No. 4, July-August 1979).

Das rheologische Verhalten realer ER-Suspensionen wird meist durch das Modell einer ER-Suspension angenähert, die sich bei einer Scherbeanspruchung ohne Feldbeeinflussung wie eine Newton'sche Flüssigkeit verhält:

$$\tau_y = \eta \dot{\gamma}$$

Das heißt, die Schubspannung $\tau$ hängt linear von der Schergeschwindigkeit $\dot{\gamma}$ ab, wobei der Proportionalitätsfaktor $\eta$ als dynamische Viskosität bezeichnet wird. Strömt die ER-Suspension durch einen Spalt, so zeigt sich ohne elektrische Feldeinwirkung die Durchflußcharakteristik einer Newton'schen Flüssigkeit mit einem proportionalen Zusammenhang zwischen der Druckdifferenz und dem Volumenstrom.

Nach Anliegen eines elektrischen Gleich- oder Wechselfeldes ändert sich das rheologische Verhalten. Das Verhalten von elektrorheologischen Flüssigkeiten kann dann durch das Fließgesetz von Bingham beschrieben werden, da sich bei anliegendem Feld die Flüssigkeit unterhalb der Fließgrenze wie ein fester Werkstoff verhält und nach Überschreiten der Fließgrenze wie eine Flüssigkeit.

$$\tau_y = \tau_{y,f} + \eta_y \gamma$$

Nach Überschreiten der Grenzscherspannung besteht wieder ein linearer Zusammenhang zwischen Schubspannung und Scherrate. Die Höhe der Fließgrenze hängt von der angelegten elektrischen Feldstärke ab. Diese oben beschriebene Charakteristik der elektrorheologischen Flüssigkeiten bei Feldeinwirkung ist aufgrund des quasi schlagartig einsetzenden Durchflusses bei Überschreiten der Fließgrenze für einige Anwendungen störend.

Aufgabe der vorliegenden Erfindung ist es, eine Anordnung bereitzustellen, mit der die Vermeidung des Bingham-Effektes von in einem Strömungskanal befindlichen mit einem elektrischen Feld beeinflußten ERF erreicht wird.

Diese Aufgabe wird dadurch gelöst, daß Mittel vorgesehen sind, die eine Veränderung des elektrischen Feldes über den Querschnitt des Strömungskanals bewirken. Durch eine kontinuierliche Veränderung des elektrischen Feldes über dem Querschnitt des Strömungsspaltes kann eine örtlich definierte Fließgrenze eingestellt werden. Diese Fließgrenze kann in Abhängigkeit von der angelegten elektrischen Spannung und/oder der Höhe der Schubspannung im Strömungskanal und/oder des Abstandes der Elektroden eingestellt werden. Hierdurch ist der Strömungskanal steuerbar. In dem Bereich der Fließgrenze entsteht ein geringer Sprung im Stromanstieg zur Querschnittsverjüngung hin.

Je nach Konstruktion kann hierdurch eine Reduzierung der Betriebsspannung erfolgen, die bei der bekannten Anwendung in einem elektrischen Feld gleicher Feldstärke über den Querschnittsbereich relativ hoch sein muß.

Eine Reduzierung des Stromverbrauchs wird weiterhin erzielt, da es darauf ankommt, daß flüssige elektrorheologische Flüssigkeiten bewegt werden, für die lediglich der Querschnitt des Durchflußkanals verändert wird. In Bereichen mit verfestigter Flüssigkeit kann der Strom dann gering sein.

Die kontinuierliche Veränderung des elektrischen Feldes kann durch Auswahl einer geeigneten Querschnittsform des Strömungskanals derart erreicht werden, daß der Abstand der Kondensatorflächen quer zur Strömungsrichtung variiert. Eine weitere erfindungsgemäße Lösung der Aufgabe wird dadurch erreicht, daß bei gleichbleibendem Kondensatorabstand über den Strömungsquerschnitt variable Spannungen angelegt werden und somit elektrische Felder unterschiedlicher Feldstärke über den Querschnittsbereich erzielt werden. Dies kann in vorteilhafter Weise durch über den Querschnittsbereich angeordneter einzeln ansteuerbarer kurzer Elektrodenabschnitte erreicht werden.

Eine weitere Ausführungsvariante sieht die Verwendung eines Widerstandsmaterials vor, wobei das Widerstandsmaterial über den Querschnittsbereich unterschiedliche Feldstärken erzeugt.

Bei den beiden letztgenannten erfindungsgemäßen Ausführungsformen kann in vorteilhafter Weise ein Strömungskanal mit gleichbleibendem Kondensatorabstand verwendet werden.

In einer besonders bevorzugten Ausführungsform ist vorgesehen, daß in dem Strömungskanal zumindest ein Abschnittsbereich ohne Feldeinwirkung ausgebildet ist, so daß durch diesen Bereich immer elektrorheologische Flüssigkeit strömen kann.

Die erfindungsgemäße Anordnung kann vorteilhafterweise mit einem Konstantstrom betrieben werden, wodurch die Wirkung einer Volumenstromregelung der elektrorheologischen Flüssigkeit erreicht wird.

Aus der DE-OS 36 31 107 ist in Fig. 3 sowie zugehöriger Beschreibung Spalte 8, 2. Absatz die Ausführung eines Durchtrittkanals mit trapezoid geformtem Querschnitt, in den eine Flachelektrode hineinragt, offenbart. Der erfindungsgemäße Effekt der Vermeidung des Bingham-Verhaltens der elektrorheologischen Flüssigkeit durch unterschiedliche elektrische Feldstärken über den Spaltquerschnitt ist jedoch aus dieser Druckschrift nicht ersichtlich.

Nachfolgend werden Ausführungsbeispiele näher erläutert, die in den Zeichnungen dargestellt sind. Es zeigt:

Fig. 1a - 1d: verschiedene Ausführungsformen eines erfindungsgemäßen Strömungskanals im Querschnitt;

Fig. 2: eine Ausführungsvariante der erfindungsgemäßen Anordnung im Querschnitt und

Fig. 3: eine weitere Ausführungsvariante im Querschnitt.

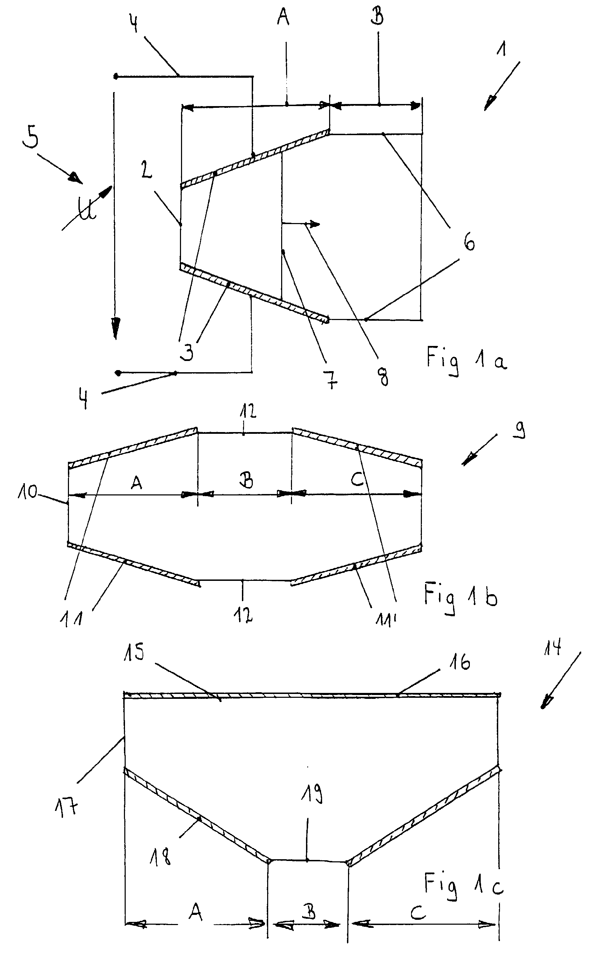

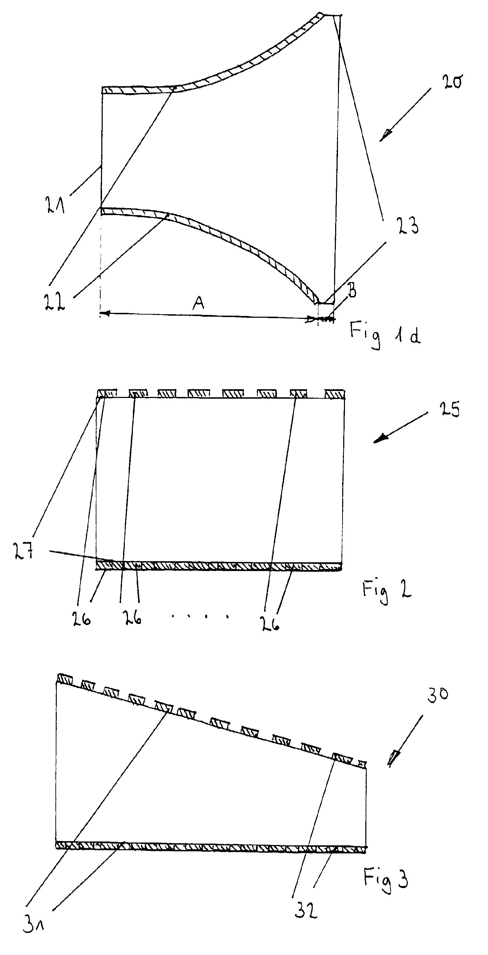

In Fig. 1a ist ein erfindungsgemäßer Strömungskanal 1 im Querschnitt dargestellt. Der Strömungskanal 1 weist über die Querschnittsbreite zwei Abschnitte A, B auf. Der Abschnitt A ist konisch ausgebildet, wobei sich der Strömungskanal 1 vom linken Randbereich 2 zur Strömungskanalmitte hin erweitert. Der Abschnitt A, der durch Strömungskanalbegrenzungswände gebildet wird ist mit Elektrodenanordnung 3 versehen, die über elektrische Leitungen 4 mit einer regelbaren Hochspannungsquelle 5 in Verbindung stehen. An den Abschnitt A schließt sich Abschnitt B an, der parallel beabstandete Strömungskanalbegrenzungswände 6 aufweist. Der Abschnitt B wird als Newton'scher Bereich bezeichnet, da in diesem Querschnittsbereich die elektrorheologische Flüssigkeit immer durch den Strömungskanal strömen kann und sich, da kein elektrisches Feld anliegt, wie eine Newton'sche Flüssigkeit verhält. Der Abschnitt A wird als Bingham-Bereich bezeichnet, da sich beim Anlegen einer Spannung ein elektrisches Feld unterschiedlicher Feldstärke über den Strömungsquerschnitt im Abschnitt A ausbildet. Da der Strömungsquerschnitt am Rand wesentlich kleiner ist als im Übergangsbereich von Abschnitt A zu Abschnitt B, wobei sich der Strömungsquerschnitt dazwischen kontinuierlich vergrößert, ergibt sich im Abschnitt A ein elektrisches Feld kontinuierlich verändernder Feldstärke. Durch die kontinuierliche Veränderung des elektrischen Feldes über den Abschnitt A kann man eine örtlich definierte Fließgrenze 7 einstellen. Diese Fließgrenze 7 kann in Abhängigkeit von der angelegten elektrischen Spannung und/oder der Schubspannung im Strömungskanal 1 und/oder des Abstandes der Elektroden 3 eingestellt werden. Der Ort der Fließgrenze 7 verschiebt sich zum linken Randbereich 2 bei Verringerung der elektrischen Spannung und/oder Erhöhung der Schubspannung und/oder Vergrößerung des Abstandes der Elektrodenanordnungen zueinander. Die Fließgrenze 7 ist in Fig. la durch den senkrechten Strich schematisch dargestellt, wobei der Pfeil 8 symbolisiert, daß ab Fließgrenze 7 in Pfeilrichtung gesehen die elektrorheologische Flüssigkeit strömt und der Bereich links von der Fließgrenze 7 verfestigt ist.

In Fig. 1b ist eine weitere Ausführungsvariante eines Strömungskanals 9 dargestellt, wobei der Strömungsquerschnitt in drei Abschnitte A, B, C aufgeteilt ist. Abschnitt A ist wie zu Fig. 1a beschrieben als vom Rand 10 des Strömungskanals 9 ausgehend konisch sich erweiternder Querschnittsbereich, der durch Strömungskanalbegrenzungswände gebildet wird mit Elektrodenanordnungen 11 ausgebildet. Abschnitt A geht in Abschnitt B über, der wie zu Fig. la beschrieben parallel beabstandete Strömungskanalbegrenzungswände 12 ohne Elektrodenanordnungen aufweist. An den Abschnitt B schließt sich Abschnitt C an, der spiegelbildlich zu Abschnitt A konisch zum Rand hin verjüngende Strömungskanalbegrenzungswände mit Elektrodenanordnungen 11' aufweist. Durch diese Ausbildung entsteht im Bereich A ein Bingham-Bereich, in Bereich B ein Newton'scher Bereich und in Bereich C ein Bingham-Bereich. Hierdurch kann sowohl im Bereich A als auch im Bereich C eine über die Querschnittsbreite des Bereichs A bzw. C örtlich definierte Fließgrenze eingestellt werden.

In Fig. 1c ist eine weitere Variante einer erfindungsgemäßen Anordnung eines Strömungskanals 14 im Querschnitt dargestellt, wobei die obere Strömungskanalbegrenzungswand 15 des Strömungskanals 14 als eine horizontal verlaufende Strömungskanalbegrenzungswand 15 mit über die gesamte Breite des Strömungsquerschnitts angeordneter Elektrodenanordnung 16 besteht. Die untere Strömungskanalbegrenzungswand ist in Abschnitt A, B, C unterteilt. Abschnitt A ist ausgehend von dem Strömungskanalrand 17 zur Mitte hin konisch erweiternd ausgebildet und ist mit einer Elektrodenanordnung 18 versehen. Der anschließende Abschnitt B ist als parallele Strömungskanalbegrenzungswand 19 zu der oberen Strömungskanalbegrenzungswand 15 ausgebildet, weist jedoch keine Elektrodenanordnung auf. Abschnitt C ist spiegelbildlich zu Abschnitt A ausgebildet.

In Fig. 1d ist ein weiterer erfindungsgemäßer Strömungskanal 20 im Querschnitt dargestellt. Der Strömungskanal 20 weist über die Querschnittsbreite zwei Abschnitte A, B auf. Der Abschnitt A ist von einer seitlichen Begrenzungswand 21 ausgehend im wesentlichen trichterförmig sich erweiternd ausgebildet. Abschnitt A, der durch Strömungskanalbegrenzungswände gebildet wird, ist mit Elektrodenanordnung 22 versehen. Die elektrischen Leitungen und die zugeordnete Hochspannungsquelle sind zeichnerisch nicht dargestellt. Abschnitt A geht in Abschnitt B über, der parallel beabstandete Strömungskanalbegrenzungswände 23 aufweist. Abschnitt B weist keine Elektrodenanordnungen auf, so daß in diesem Bereich immer elektrorheologische Flüssigkeit strömt.

Die zu den Figuren la bis ld beschriebenen Ausführungsbeispiele sind nur einige mögliche beispielhaft dargestellte Varianten, auf die die Erfindung nicht beschränkt ist. Wie zu den Figuren la bis ld beschrieben ist, weisen die jeweiligen Strömungskanäle jeweils einen Abschnitt über den Querschnittsbereich auf, der als Newton'scher Bereich ausgebildet ist. Dieser Querschnittsbereich kann jede beliebige Form sowie Querschnittsgröße annehmen und kann zu einer Grundabstimmung zum Beispiel eines Stoßdämpfers verwendet werden. Anstelle der Ausbildung eines Abschnittes über dem Querschnittsbereich ohne Feldeinwirkung, könnte auch ein Bypass-Kanal ausgebildet werden. Für andere Anwendungsfälle kann es jedoch auch vorteilhaft sein, einen Strömungskanal ohne einen Newton'schen Bereich auszubilden. Bei einem Strömungskanal ohne einen Abschnitt mit einem Newton'schen Bereich kann der Durchfluß durch entsprechende Ansteuerung der Elektroden ganz gesperrt werden.

In Fig. 2 ist eine weitere Variante einer erfindungsgemäßen Anordnung eines Strömungskanals 25 schematisch dargestellt. Dieser Strömungskanal 25 weist einen rechteckigen Querschnitt auf und ist mit einer Vielzahl von einzeln ansteuerbaren Elektrodenabschnitten 26 versehen. Die Elektrodenabschnitte 26 sind auf der oberen Strömungskanalbegrenzungswand 27 des Strömungskanals 25 über die Breite verteilt. Die untere Strömungskanalbegrenzungswand ist das gemeinsame Bezugspotential. Durch entsprechende Ansteuerung der Elektrodenabschnitte 26 kann ebenfalls ein elektrisches Feld unterschiedlicher Feldstärke über den Strömungsquerschnitt erzielt werden. Auf die Darstellung der elektrischen Leitungen sowie der steuerbaren Hochspannungsquelle wurde der Einfachheit halber verzichtet.

Anstelle der Verwendung von einzeln ansteuerbaren Elektrodenabschnitten zur Erzielung eines elektrischen Feldes unterschiedlicher Feldstärke über den Querschnittsbereich kann ein Widerstandsmaterial eingesetzt werden, das über den Querschnittsbereich kontinuierlich sich verändernde Widerstandswerte hat, die in einer Richtung der Querschnittsbreite zunehmen.

In Fig. 3 ist die Kombination eines über die Querschnittsbreite konisch sich erweiternden Strömungskanals 30 sowie zusätzlich mit einer Vielzahl von an der oberen Strömungskanalbegrenzungswand 31 des Strömungskanals 30 verteilt angeordneten einzeln ansteuerbaren Elektrodenabsdnitten 32 dargestellt.

Eine weitere nicht dargestellte Ausführungsform sieht einen konisch sich erweiternden Strömungskanal und die Verwendung eines Widerstandsmaterials vor, wobei das Widerstandsmaterial derart angeordnet wird, daß in Richtung des sich erweiternden Querschnitts die Widerstände abnehmen. Die Verwendung von Widerstandsmaterial als mindestens eine Elektrode verhilft zur Strombegrenzung in den Bereichen, die infolge des elektrorheologischen Effektes leitend sind. Hierdurch kann der Energieaufwand verringert werden.

Die Dimensionierung des Widerstandsmaterials muß so abgestimmt sein, daß das elektrische Feld im Bereich der fließenden Flüssigkeit nahezu unbeeinflußt bleibt, sich das elektrische Feld dagegen verringert, wo infolge der verfestigten Flüssigkeit der elektrische Strom ansteigt. Aus diesem Grund läßt sich der Strom besser begrenzen und steigt in Richtung des enger werdenden Durchflußbereichs nicht wesentlich an.

Eine weitere Anwendung eines konisch sich erweiternden Strömungskanals mit angeordnetem Widerstandsmaterial, wobei in Richtung des sich erweiterenden Querschnitts die Widerstände abnehmen, ist die Abstimmung durch die Steuerung der Schubspannung/ Schergeschwindigkeits-Kennlinie durch Variation der Form des Strömungskanals in Bereiche verschieden großer elektrischer Felder.

Für die Zuordnung von bestimmten elektrischen Feldgrößen zu gewünschten Durchflußquerschnitten kann zum Beispiel ein keiloder trapezförmiger Strömungskanal verwendet werden. Die Dimensionierung des Widerstandsmaterials muß, im Gegensatz zur Anwendung zur Strombegrenzung, so groß gewählt werden, daß die Abmessungen des Strömungskanals die partiellen elektrischen Feldstärken nicht wesentlich beeinflussen. Hierfür muß jedoch eine höhere Versorgungsspannung verwendet werden.

Anstelle von Widerstandsmaterial als Elektrode kann bei Verwendung von einzelnen Elektrodenabschnitten bei der Dimensionierung von diskreten Widerständen die Anwendung zur Strombegrenzung oder auch "Steuerung" wie oben beschrieben erfolgen.

Eine Anwendung im Betrieb mit einem steuerbaren Konstantstrom, anstatt einer elektrischen Spannung bewirkt, daß der Strömungskanal nur unwesentlich durch die Höhe der Schubspannung beeinflußt wird. Die zuvor beschriebene Anwendung kann auch zum Betrieb mit einer Volumenstromregelung verwendet werden.

Anordnung zur Steuerung des Fließverhaltens von in einem Strömungskanal befindlichen elektrorheologischen Flüssigkeiten

**Patentansprüche**

1. Anordnung zur Steuerung des Eließverhaltens von in einem Strömungskanal (1,9,14,20,25,30) befindlichen, mit einem elektrischen Feld beaufschlagbaren elektrorheologischen Flüssigkeiten, wobei Mittel vorgesehen sind, die eine Veränderung des elektrischen Feldes über den Querschnitt des Strömungskanals (1,9,14,20,25,30) bewirken.

2. Anordnung nach Patentanspruch L, wobei die Mittel durch die Strömungskanalbegrenzungswände gebildet werden, die derart angeordnet sind, daß sie über die Querschnittsbreite einen kontinuierlich veränderten Abstand zueinander aufweisen, und wobei die Strömungskanalbegrenzungswände mit elektrisch ansteuerbaren Elektrodenanordnungen (3,11,11,16,18,22,26 32) versehen sind.

3. Anordnung nach Patentanspruch 1, wobei die Mittel durch an parallel beabstandeten. Strömungskanalbegrenzungswänden des Strömungskanals über dessen Breite angeordneten einzeln ansteuerbaren Elektrodenabschnitten (26) gebildet werden.

4. Anordnung nach Patentanspruch 1, wobei die Mittel durch an parallel beabstandeten Strömungskanalbegrenzungswänden des Strömungskanals über dessen Querschnittsbreite angeordneten mit Widerstandsmaterial, dessen Widerstandswerte sich im. Verlauf der Querschnittsbreite verändern, ausgebildeten Elektrodenanordnungen gebildet werden.

5. Anordnung nach Patentanspruch 1, wobei zumindest ein Abschnitt des Strömungskanals ohne Feldbeeinflussung ausgebildet wird.

6. Anordnung nach Patentanspruch 1, wobei im Strömungskanal ein Bypass-Kanal ausgebildet wird, durch den die elektrorheologische Flüssigkeit ohne Feldbeeinflussung flieβen kann.

7. Anordnung nach Patentanspruch 2, wobei die elektrisch ansteuerbare Elektrodenanordnung einer Strömungskanalbegrenzungswand in eine Vielzahl von einzeln ansteuerbaren Elektrodenanordnungen (26,32) aufgeteilt ist.

8. Anordnung nach Patentanspruch 4, wobei sich in Richtung des zunehmenden Widerstandes des Widerstandsmaterials hin der Querschnitt verjüngt.

Fig 1 a

Fig 1 b

Fig 1 c

Fig 1d

Fig 2

Fig 3

## EUROPÄISCHER RECHERCHENBERICHT

Nummer der Anmeldung

EP 00 11 9086

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 923 057 A (CARLSON J DAVID ET AL) 8. Mai 1990 (1990-05-08) | 1-4,7 | G05D7/06 F16F7/10 C10M169/04 F16D35/00 |
| A | Whole document | 5,6,8 | |
| | --- | | |
| X | US 5 296 155 A (REITZ RONALD P) 22. März 1994 (1994-03-22) | 1-4,7 | |
| A | * Spalte 1, Zeile 22-54 * * Spalte 6, Zeile 38 - Spalte 8, Zeile 19; Ansprüche 1-11; Abbildungen 3-6 * | 5,6,8 | |
| | --- | | |
| A | US 4 898 267 A (GARRETT WAYNE H ET AL) 6. Februar 1990 (1990-02-06) * Spalte 1, Zeile 18 - Spalte 2, Zeile 45 * * Spalte 3, Zeile 64 - Spalte 8, Zeile 54; Ansprüche 1-10; Abbildung 1 * | 1-8 | |
| | ----- | | |

**RECHERCHIERTE SACHGEBIETE (Int.Cl.7)**

G05D
F16F
C10M
F16D

Der vorliegende Recherchenbericht wurde für alle Patentansprüche erstellt

| Recherchenort | Abschlußdatum der Recherche | Prüfer |
|---|---|---|
| MÜNCHEN | 27. Oktober 2000 | Pierron, P |

ANHANG ZUM EUROPÄISCHEN RECHERCHENBERICHT
ÜBER DIE EUROPÄISCHE PATENTANMELDUNG NR.                    EP 00 11 9086

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

27-10-2000

| Im Recherchenbericht angeführtes Patentdokument | Datum der Veröffentlichung | Mitglied(er) der Patentfamilie | Datum der Veröffentlichung |
|---|---|---|---|
| US 4923057 A | 08-05-1990 | KEINE | |
| US 5296155 A | 22-03-1994 | AU 3861289 A | 05-02-1990 |
| | | WO 9000583 A | 25-01-1990 |
| | | US 5518664 A | 21-05-1996 |
| | | US 5194181 A | 16-03-1993 |
| | | US 5190624 A | 02-03-1993 |
| | | US 5938978 A | 17-08-1999 |
| | | US 5945036 A | 31-08-1999 |
| US 4898267 A | 06-02-1990 | DE 69011570 D | 22-09-1994 |
| | | EP 0395007 A | 31-10-1990 |
| | | JP 3014920 A | 23-01-1991 |

EPO FORM P0461

Für nähere Einzelheiten zu diesem Anhang : siehe Amtsblatt des Europäischen Patentamts, Nr.12/82